(19) Europäisches Patentamt / European Patent Office / Office européen des brevets

(11) **EP 2 716 943 B1**

(12) **EUROPEAN PATENT SPECIFICATION**

(45) Date of publication and mention
of the grant of the patent:
**31.08.2016 Bulletin 2016/35**

(51) Int Cl.:
***F16J 15/3288*** *(2016.01)*   ***F16J 15/3296*** *(2016.01)*
***F16J 15/44*** *(2006.01)*   ***F16J 15/447*** *(2006.01)*

(21) Application number: **12187006.7**

(22) Date of filing: **02.10.2012**

(54) **Sealing arrangement, use of a sealing arrangement and turbo machinery**

Dichtungsanordnung, Verwendung der Dichtungsanordnung und Turbomaschinerie

Agencement d'étanchéité, utilisation d'un agencement d'étanchéité et turbo machine

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.04.2014 Bulletin 2014/15**

(73) Proprietor: **Siemens Aktiengesellschaft
80333 München (DE)**

(72) Inventors:
• **Hartwig, Tim
  39112 Magdeburg (DE)**
• **Kumar, Manish
  28273 Charlotte, NC (US)**

(56) References cited:
**US-A1- 2007 248 452    US-A1- 2009 008 881
US-A1- 2011 062 671    US-B1- 6 220 602
US-B2- 7 815 193**

**Description**

The invention relates to a sealing arrangement for sealing off a first region from a second region through which a fluid can flow and which can be kept at different pressures. A differential pressure can be produced between the two regions by the different pressures. The invention relates in particular to a sealing configuration that can be used for sealing in rotary machines, such as electrical rotary machines and thermal fluid-flow machines.

A device for non-contact sealing between spaces of different pressure, in particular for a fluid-flow machine in which shaft leadthroughs between spaces of different pressure have to be provided with suitable seals, is described in European Patent Application 0 611 905 A1. The specified device is formed of a labyrinth seal in which step-shaped labyrinth gaps are formed between a rotating component and a stationary component. Sealing tips are disposed in the labyrinth gaps on each of the rotating component and the stationary component, as a result of which a high degree of swirling of a medium flowing through is said to be achieved. The sealing tips between the stationary component and the rotating component are disposed as close to one another as possible, so that there is only a slight radial gap. The sealing tips extend radially in such a way that sealing tips of two adjacent steps overlap. A group of sealing tips can be caulked in place in a corresponding groove through the use of a caulking wire.

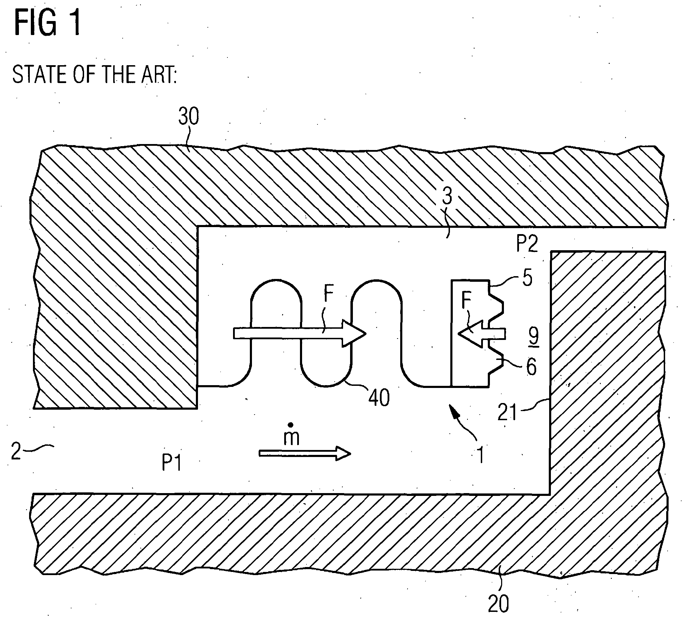

EP 1 097 325 B1 discloses a sealing arrangement for sealing off a first region 2 from a second region 3, through which regions a fluid can flow in each case and/or which can be filled with a fluid in each case and can be kept at a differential pressure P1, P2, so that a differential pressure P1-P2 is formed, see fig. 1. The sealing arrangement is having a deformation region 40 and a sealing surface 5 connected thereto. The sealing surface 5 is spaced apart from an opposing surface 21 by means of a sealing gap 9, in which case the height of the sealing gap can be set by a deformation of the deformation region 40 as a result of a force exerted by the differential pressure P1-P2. The sealing arrangement 1 comprises two sealing elements 7, 8 on the sealing surface 2 and on the opposing surface 4.

The weakness of the concept of the self-adjusting sealing described in the Patent EP 1 097 325 B1 is the reliability on the force from the gap due to throttling over different gap heights. The self-adjusting sealing works the better the smaller the gap height is and a minimal gap height of tenth of a millimeter is necessary to ensure the application. That means the application is highly sensitive to changes in relative positioning between the stator and rotor, oscillations and therefore, limited in application. This threat of contact between the rotating and the stationary components is always present.

US 6,220,602 B1 discloses a sealing arrangement for sealing off a first region from a second region between a casing and a rotor of a turbine, through which regions a fluid can flow in each case and/or which can be filled with a fluid in each case and which can be kept at different pressures, so that a differential pressure between the two regions is formed. The sealing arrangement comprises stator vanes which are movably mounted at the casing. Each stator vane is having a sealing surface, wherein the sealing surface is spaced apart from an opposing surface at the rotor to build a gap between the sealing surface and the opposing surface. The sealing arrangement further comprises first force means (spring or pressure chamber) exerting a first force in the direction from the sealing surface to the opposing surface and second force means (magnets) exerting a second force in the direction from the opposing surface to the sealing surface. The second force means comprises a first magnetic element arranged at the stator vanes and a second magnetic element arranged at the rotor, wherein the second force is larger than the first force.

A similar sealing arrangement is known from US 2011/062671 A1. At sealing element between a stator and a rotor is further known from US 7,815,193 B2, from US 2009/008881 A1 and US 2007/248452 A1.

It is an object of the present invention to solve aforesaid problems of a sealing arrangement at least partly. In particular, it is an object of the present invention to provide a sealing arrangement, in particular for a rotary machine, which overcomes the disadvantages of the afore-mentioned sealing arrangement and which is used for sealing off two regions through which a fluid can flow that are at different pressure levels in order to reduce a leakage flow from one region into the other region.

Aforesaid objects are solved by a sealing arrangement according to independent claim 1, the use of a sealing arrangement according to independent claims 12 and 13, and turbine according to independent claim 14. Further features and details of the present invention result from the sub claims, the description and the drawings. Features and details discussed with respect to the sealing arrangement can also be applied to the use of a sealing arrangement and the turbine, and vice versa.

According to a first aspect of the invention the aforesaid object is solved by a sealing arrangement for sealing off a first region from a second region between a stationary component and a rotating component, through which regions a fluid can flow in each case and/or which can be filled with a fluid in each case and which can be kept at different pressures, so that a differential pressure between the two regions is formed. The sealing arrangement comprises a base element which is movably mounted at the stationary component or optional on the rotary component, the base element having a sealing surface, wherein the sealing surface is spaced apart from an opposing surface at the rotating component to build a gap between the sealing surface and the opposing surface. The sealing arrangement further comprises at least one sealing element at the sealing surface and/or at the opposing surface to seal the gap. The at least one sealing element is a non-contact seal element because of the two different components, that means the rotating component and the stationary component. The sealing arrangement further comprises first force means exerting a first force in the direction from the sealing surface to the opposing surface and second force means exerting a second force in the direction from the opposing surface to the sealing surface, wherein the second force means comprises a first magnetic element arranged at the base element a second magnetic element arranged at the rotating component and wherein the second force is larger than the first force. Such a sealing arrangement overcomes the disadvantages of the sealing arrangements of the state of the art described above. The invention represents a new concept that also relies on the equilibrium of forces of the sealing arrangement but erases the dependency on special arrangements of the fin heights of the sealing element and therefore the sensitivity due to cap height changes. Due to the second force means, in particular the first magnetic element arranged at the base element and the second magnetic element arranged at the rotating component it is possible to implement a certain amount of magnetic fields to generate a repulsive force in the gap between the sealing surface and the opposing surface. Furthermore, it provides a simple solution to create the first force that leads to the self-adjusting behavior of the sealing arrangement. Such a sealing arrangement enables to use a conventional sealing element within the gap, like look through sealings, labyrinth sealings or brush sealings.

According to the invention the sealing arrangement further comprises two or more first magnetic elements which are constructed in such a way that different second forces can be generated between each first magnetic element and the second magnetic element. Advantageously two or more distance measuring devices are provided to measure the height of the gap between the sealing surface assigned to each first magnetic element and the opposing surface even at particular circumferential positions, wherein the control unit can regulate the current to the electromagnet of each first magnetic element in such a way that the gap between all first magnetic elements and the opposing surface is the same. That means, the control unit can increase or decrease the current to the electromagnet separately. This enables that the sealing surface can be kept parallel to the opposing surface even in cases where the longitudinal axis of the rotating component is not parallel to the longitudinal axis of the stationary component. The measurement of the gap height can be done in several positions throughout the circumference of the sealing surface, so that the different electromagnets can be controlled differently. This will adjust the sealing element to the slightly declined shaft shoulder and even ensures a constant gap over the entire circumference of the sealing surface. The base element can be split in two or more sections and assembled before and after the rotating element is put into the casing of the stationary element, accordingly to the position of the seal section.

Preferred is a sealing arrangement wherein the first force means comprises a spring, in particular a coil spring, or a hydraulic system. An inventive step lies in the development of the new arrangement of different forces making the sealing arrangement independent of the force from the throttling and therefore increasing the range of seal fin systems, labyrinth seals for example that can be used to seal the gap. On the one hand there is a first force, for example a simple spring force or a source from a hydraulic system, and on the other hand there is a second force in form of a repulsive force implemented by the first magnetic and the second magnetic elements.

One advantage of such a sealing arrangement is that the necessity of a below or a below like behaving body as shown in EP 1 097 325 B1 is removed. On the one hand a spring force erected by a simple spring, like a disc spring or a coil spring, or even a hydraulic force erected by a hydraulic system enables the sealing arrangement to elongate according to the relative deformations between the rotating components and the stationary component. On the other hand the repulsive force between to magnetic fields remains a gap and prevents the opponent surfaces against contact. The second force is generated by at least two magnetic fields where the opposite poles on the stationary component and the rotating component are the same.

Therefore, a sealing arrangement is preferred which is characterized in that the first magnetic element generates a first magnetic field and the second magnetic element generates a second magnetic field, wherein both magnetic fields have the same orientation.

The base element which is the sealing board preferably consists of a non-magnetic material in such a manner that a magnetic field can be pulled up. According to a preferred development of the invention a sealing arrangement is preferred which is characterized in that the first magnetic element comprises an electromagnet, a permanent magnet or a magnetized material and the second magnetic element, a permanent magnet or a magnetized material. That means a magnetic field can be created by the magnetic element and a second magnetic field can be generated by the second magnetic element. Because of the two magnetic fields a repulsive force is established. That means on the opponent side which is the side of the rotating component a second magnetic field is erected that has the same pole than the magnetic field on the stationary component side. Due to the two constant magnetic fields the repulsive force only depends on the inverse quadratic of the gap height. That means the closer the gap the higher becomes the force between the stationary and the rotating component and this prevents the components against contact. To ensure non-contact, the following equation has to be true for every load case:

$$FMmax(gap\ height \rightarrow infinity) > \Sigma\ FS$$

In the gap any kind of conventional seal technology can be used. Therefore a sealing arrangement is preferred wherein the at least one sealing element comprises a look through seal, a labyrinth seal or a brush seal. A big advantage is that the relative deformation that has to be considered in conventional seal designs will be taken care of by the sealing arrangement and smaller gap heights in axial or radial directions can be achieved.

According to another preferred development of the invention a sealing arrangement can be provided which is characterized in that the base element is linear guided in guiding means along a guiding direction, wherein the base element is movable in such a way that the sealing surface is arranged parallel or in particular parallel to the opposing surface and perpendicular or in particular perpendicular to the guiding direction. The guiding means are fixed at the stationary component. Preferred is a sealing arrangement wherein the first force means are guided within the guiding means as well. The guiding means enables that the first force means can exert a first force in the direction from the sealing surface to the opposing surface perpendicular to the surfaces. The base element can be guided in the guiding means in such a way that the base element and therefore the sealing surface is stopped in a position before the sealing surface can contact the opposing surface of the rotating component.

According to a very preferred development of the invention a sealing arrangement can provide a distance measuring device to measure the height of the gap and a control unit which is connected to the distance measuring device in a data communication way, wherein the control unit can regulate the current of the first magnetic element which is a electromagnet in dependency of the measured height of the gap. That means to solve the problem of varying gap heights a control system is implemented that measures the distance between the rotating and the stationary component, in particular the distance between the sealing surface and the opposing surface. The signal measured by the distance measuring device can be transferred to the control unit that increases or decreases the current of the electromagnet arranged at the base element. Hence, the repulsive force between the magnetic fields changes and a new equilibrium can be achieved. The current will be changed in such a manner that a constant gap height can be set up. Advantageously very small and constant gap heights can be achieved. One advantage lies in the setup of the control unit for the axial self-adjusting sealing arrangement that works with a constant gap height and constant leakage mass flow instead of varying gap heights and changing leakage mass flows. Further advantages are the reduction of leakage mass flow due to the very small gaps.

According to a very preferred development of the invention, the control unit of the sealing arrangement can regulate the current to the electromagnet in such a way that a constant height of the gap can be set up. The distance measuring device can measure the height of the gap between the sealing surface and the opposing surface. The measured results can be transferred from the distance measuring device non wireless or wireless to the control unit that can increase or decrease the current to the electromagnet on the stationary side. That means the control unit controls the acting current for the electromagnet which is mounted at the base element. This causes a change of the magnetic field of the electromagnet. Whenever the gap height exceeds a certain limitation, the current for the electromagnet can be adjusted, so that the gap height remains constant. Due to the positions of the first magnetic element at the base element and the second magnetic element at the rotating component different magnetic fields are necessary to maintain the gap. Both magnetic fields have to be of the same poles. The function of following the actual movement of the rotor is given by the first force of the first force means.

Such a sealing arrangement enables to follow the movement between the rotary component and the stationary component even without having any force from the gap. Therefore, the first force must be equal to the repulsive force of the second force means depending on the gap height. The constant gap height will be initially set up due to the designed forces.

According to a second aspect of the invention the object is solved by the use of a sealing arrangement according to the first aspect of the invention, in particular according to one of the claims 1 to 11, which is arranged in a rotary machine, in particular a turbine, a compressor or a generator. Especially the use of one or more sealing arrangements according to the first aspect of the invention which is arranged in a steam turbine is preferred. The use of a sealing arrangement provides the same advantages, which have been discussed in detail according to the sealing arrangement of the first aspect of the invention.

Preferred is the use of a sealing arrangement according to the first aspect of the invention in which the opposing surface is arranged at a rotor or a rotor blade and the sealing surface is arranged at a housing or a guide blade of a fluid flow machine, in particular a turbine like a steam turbine.

According to a third aspect of the invention the object is solved by a turbo machinery like a turbine, in particular a gas or steam turbine, comprising at least one sealing arrangement according to the first aspect of the invention, in particular according to one of the claims 1 to 10. The turbine provides the same advantages, which have been discussed in detail as to the sealing arrangement according to the first aspect of the invention.

The present invention is further described with respect to the accompanying figures. The figures schematically:

Fig. 1    a sealing arrangement for sealing off a first region from a second region in a rotary machine according to the state of the art,

Fig. 2    an illustrative example of a sealing arrangement,

Fig. 3    a sealing arrangement according to the invention,

Fig. 4    another illustrative example of a sealing arrangement and

Fig. 5    an electromagnet in two different views according to the invention.

Fig. 1 shows a sealing arrangement of a rotary machine according to the state of the art.

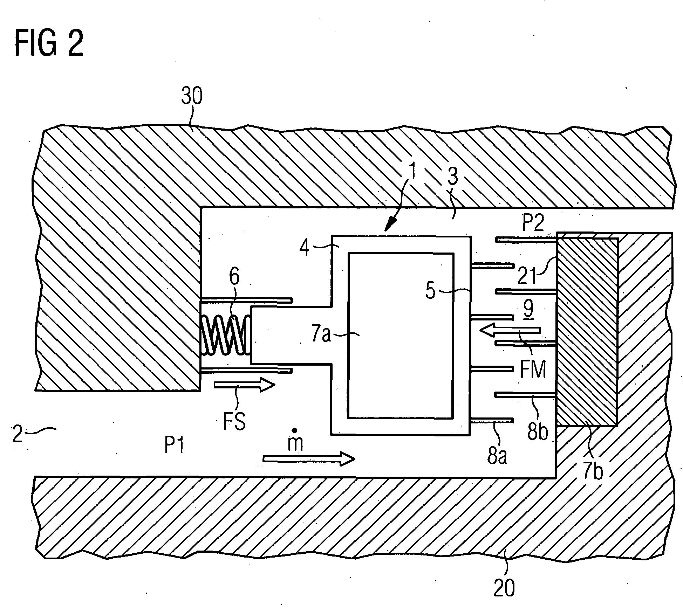

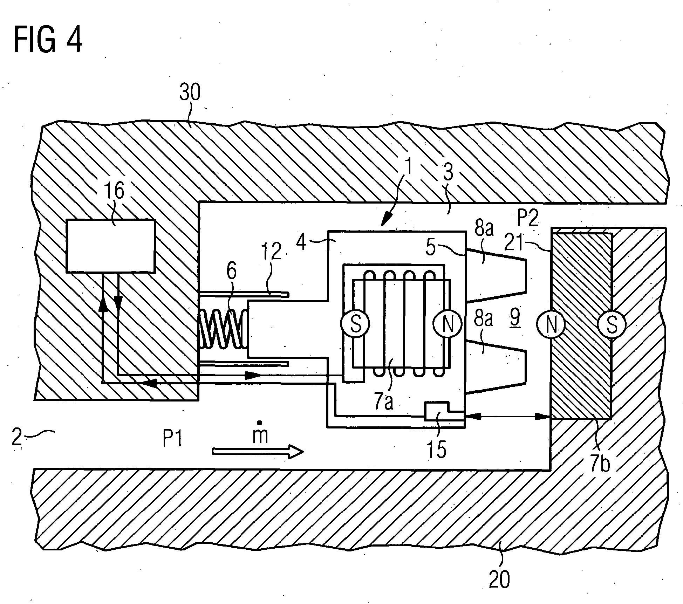

Fig. 2 discloses schematically an illustrative example of a sealing arrangement. The sealing arrangement 1 is arranged between a rotating component 20 and a stationary component 30 of a rotary machine, in particular a turbine like a steam turbine. The sealing arrangement 1 is for sealing off a first region 2 from a second region 3 between the stationary component 30 and the rotating component 20, through which regions 2, 3 a fluid can flow in each case and/or which can be filled with a fluid in each case and which can be kept at different pressures P1, P2, so that a differential pressure $\Delta P = P1-P2$ between the two regions is formed. The sealing arrangement 1 comprises a base element 4 which is movably mounted at the stationary component 30. The base element 4 has a sealing surface 5, the rotating component 20 has an opposing surface 21. That means the sealing surface 5 is spaced apart from the opposing surface 21 at the rotating component 20 to build a gap 9 between the sealing surface 5 and the opposing surface 21. The sealing arrangement 1 further comprises at least one sealing element 8a at the sealing surface 5 and at the opposing surface 21 to seal the gap 9. It is possible that only at the sealing surface 5 sealing elements 8a are arranged. On the other hand it is possible that only at the opposing surface 21 sealing elements 8b are arranged. The sealing arrangement 1 further comprises first force means 6, here in form of a coil spring, which exerts a first force FS in the direction from the sealing surface 5 to the opposing surface 21. Further, the sealing arrangement comprises a second force means in form of a first magnetic element 7a and a second magnetic element 7b which can exert a second force FM in the direction from the opposing surface 21 to the sealing surface 5. The first magnetic element 7a is arranged at the base element 4 at the stationary component 30, wherein the second magnetic element 7b is arranged at the rotating component 20, in particular near the opposing surface 21 of the rotating component 20. The second force FM is larger than the first force FS. The sealing arrangement 1 is a self-adjustable sealing arrangement which is constructed in an easy way. On the side of the stationary component 30 first force means, for example a disc spring or a hydraulic system, enables the base element 4 of the sealing arrangement 1 to elongate according to the relative deformation between the stationary component 30 and the rotating component 20. On the other hand the repulsive force FM between two magnetic fields of the first magnetic element 7a and the second magnetic element 7b maintains a gap 9 between the sealing surface 5 and the opposing surface 21. The repulsive force FM prevents the two surfaces 5, 21 against contact. The repulsive force FM is generated by two magnetic fields where the opposite pulse of the first magnetic element 7a and the second magnetic 7b are the same. The first magnetic element 7a and the second magnetic element 7b each can be an electromagnet with constant current supply, a permanent magnet or a magnetized material. In a preferred embodiment of the sealing arrangement 1 the second magnetic element 7b arranged at the rotating component 20 is a permanent magnet or comprises a magnetized material. The second magnetic element 7b is preferably arranged at or near the opposing surface 21 of the rotating component 20. Advantageously the second magnetic element 7b builds the opposing surface 21. The first magnetic element 7a arranged at the base element 4 is preferably an electromagnet with a current supply, see Fig. 4. The sealing arrangement 1 according to Fig. 4 comprises a distance measuring device 15 which can measure the height of the gap 9 between the sealing surface 5 and the opposing surface 21. The distance measuring device 15 is connected in a data communicating way with a control unit 16 arranged at the stationary component 30. Measured data can be sent from the distance measuring device 15 to the control unit 16. Depending on the measured height of the gap 9 between the sealing surface 5 and the opposing surface 21 the control unit 16 can increase or decrease the current of the electromagnet 7a. Hence, the repulsive force FM between the magnetic field of the first magnetic element 7a and the second magnetic element 7b changes and a new equilibrium is achieved. The current will be changed in such a manner that a constant gap height is set up. Such a sealing arrangement 1 enables that much smaller constant gap heights can be achieved. Such an axial self-adjusting sealing arrangement 1 works with a constant gap height and constant leakage mass flow. Such a sealing arrangement 1 has a compact design and reduces the leakage mass flow due to very small gaps 9.

One advantage of the inventive sealing arrangement 1 according to the Figs. 2 to 4 is that all kinds of sealing elements 8a, 8b at the sealing surface 5 and/or at the opposing surface 21 to seal the gap 9 can be used. For example, look through seals, labyrinth seals or brush seals can be easily used.

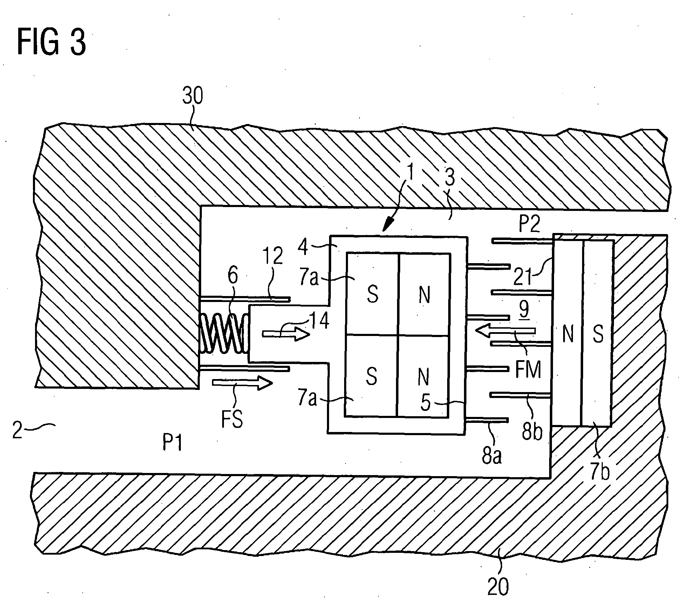

In Fig. 3 a sealing arrangement 1 according to the invention is disclosed, wherein the first magnetic element 7a is split into two parts, an upper part and a lower part. Each part is an electromagnet with a separate current supply, not disclosed. This enables that depending on the relative position of the stationary component 30 to the rotating component 20 and therefore depending on different heights of the gap 9 the control unit 16 can increase or decrease the current to each electromagnet separately. This enables for example that the magnetic field of the upper part of the first magnetic element 7a is stronger than the lower part of the first magnetic element 7a, so that the base element 4 and therefore the sealing surface 5 can be inclined a little bit in one direction, so that the sealing surface 5 can be kept parallel or nearly parallel to the opposing surface 21 of the rotating component.

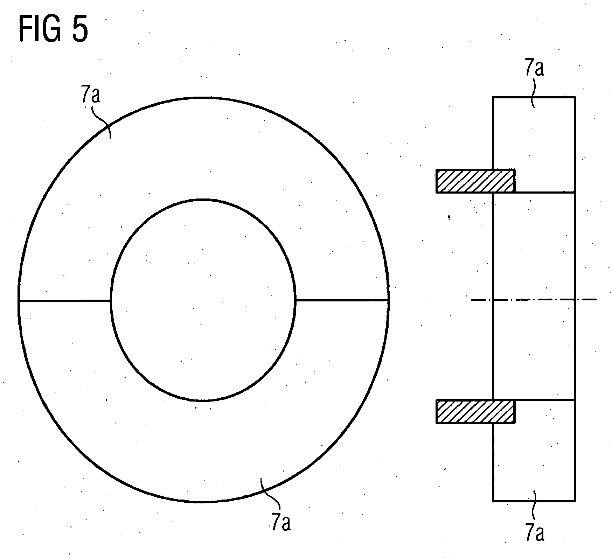

Fig. 5 shows schematically a first magnetic element 7a with a lower part and an upper part. The lower part and the upper part are two separate electromagnets. Each part can be supplied with its one current. Therefore, it is possible to generate two different magnetic fields at each part.

## Claims

1. Sealing arrangement (1) for sealing off a first region (2) from a second region (3) between a stationary component (30) and a rotating component (20), through which regions (2, 3) a fluid can flow in each case and/or which can be filled with a fluid in each case and which can be kept at different pressures (P1, P2), so that a differential pressure (P1-P2) between the two regions (2, 3) is formed,
the sealing arrangement (1)
comprising a base element (4) which is movably mounted at the stationary component (30), the base element (4) having a sealing surface (5), wherein the sealing surface (5) is spaced apart from an opposing surface (21) at the rotating component (20) to build a gap (9) between the sealing surface (5) and the opposing surface (21),
comprising first force means (6) exerting a first force (FS) in the direction from the sealing surface (5) to the opposing surface (21),
further comprising second force means (7a, 7b) exerting a second force (FM) in the direction from the opposing surface (21) to the sealing surface (5), wherein the second force means (7a, 7b) comprises a first magnetic element (7a) arranged at the base element (4) and a second magnetic element (7b) arranged at the rotating component (20) and wherein the second force (FM) is larger than the first force (FS) to prevent the opposing surfaces (5, 21) against contact, **characterized in that** the sealing arrangement (1) comprises at least one sealing element (8a, 8b) at the sealing surface (5) and/or at the opposing surface (21) to seal the gap (9) and that two or more first magnetic elements (7a) are provided which are constructed in such a way that different second forces (FM) can be generated between each first magnetic element (7a) and the second magnetic element (7b).

2. Sealing arrangement (1) according to claim 1, **characterized in that** the first force means (6) comprises a spring, in particular a coil spring, or a hydraulic system.

3. Sealing arrangement (1) according to claim 1 or 2, **characterized in that** the second force (FM) is a repulsive force between the first magnetic element (7a) and the second magnetic element (7b).

4. Sealing arrangement (1) according to any of the preceding claims, **characterized in that** the first magnetic element (7a) generates a first magnetic field and the second magnetic element (7b) generates a second magnetic field, wherein both magnetic fields have the same orientation.

5. Sealing arrangement (1) according to any of the preceding claims, **characterized in that** the first magnetic element (7a) comprises an electromagnet, a permanent magnet or a magnetized material and the second magnetic element (7b) comprises an electromagnet, a permanent magnet or a magnetized material.

6. Sealing arrangement (1) according to any of the preceding claims, **characterized in that** the at least one sealing element (8a, 8b) comprises a look through seal, a labyrinth seal or a brush seal.

7. Sealing arrangement (1) according to any of the preceding claims, **characterized in that** the base element (4) consists of a non-magnetic material.

8. Sealing arrangement (1) according to any of the preceding claims, **characterized in that** the base element (4) is linear guided in guiding means (12) along a guiding direction (14), wherein the base element (4) is moveable in such a way that the sealing surface (5) is arranged parallel or in particular parallel to the opposing surface (21) and perpendicular or in particular perpendicular to the guiding direction (14).

9. Sealing arrangement (1) according to any of the preceding claims, **characterized in that** a distance measuring device (15) is provided to measure the height of the gap (9) and that a control unit (16) is provided which is connected to the distance measuring device (15) in a data communicating way, wherein the control unit (16) can regulate the current of the first magnetic element (7a) which is an electromagnet in dependency of the measured height of the gap (9).

10. Sealing arrangement (1) according to claim 9, **characterized in that** the control unit (16) can regulate the current to the electromagnet (7a) in such a way that a constant height of the gap (9) can be set up.

11. Sealing arrangement (1) according to any of the preceding claims, **characterized in that** two or more distance measuring devices (15) are provided to measure the height of the gap (9) between the sealing surface (5) assigned to each first magnetic element (7a) and the opposing surface (21), wherein the control unit (16) can regulate the current to the electromagnet (7a) of each first magnetic element (7a) in such a way that the gap (9) between all first magnetic elements (7a) and the opposing surface (21) is the same.

12. Use of a sealing arrangement (1) according to one of the preceding claims, which is arranged in a rotary machine, in particular a turbine, a compressor or a generator.

13. Use of a sealing arrangement (1) according to one of the preceding claims 1 to 11, in which the opposing surface (5) is arranged at a rotor (20) or rotor blade and the sealing surface (5) is arranged at a housing (30) or a guide blade of a fluid flow machine, in particular a steam turbine.

14. Turbo machinery like turbine, in particular gas or steam turbine, comprising a sealing arrangement (1) according to one of the claims 1 to 10.


**Patentansprüche**

1. Dichtungsanordnung (1) zum Abdichten eines ersten Bereichs (2) gegenüber einem zweiten Bereich (3) zwischen einer ortsfesten Komponente (30) und einer rotierenden Komponente (20), wobei durch die Bereiche (2, 3) jeweils ein Fluid strömen kann und/oder diese jeweils mit einem Fluid gefüllt sein und auf unterschiedlichen Drücken (P1, P2) gehalten werden können, so dass eine Druckdifferenz (P1-P2) zwischen den beiden Bereichen (2, 3) entsteht, wobei die Dichtungsanordnung (1)
ein Grundelement (4) umfasst, das beweglich an der ortsfesten Komponente (30) angebracht ist, wobei das Grundelement (4) eine Dichtfläche (5) aufweist, die von einer gegenüberliegenden Fläche (21) an der rotierenden Komponente (20) beabstandet ist, so dass ein Spalt (9) zwischen der Dichtfläche (5) und der gegenüberliegenden Fläche (21) gebildet wird,
ein erstes Kraftmittel (6) umfasst, das in Richtung von der Dichtfläche (5) zu der gegenüberliegenden Fläche (21) eine erste Kraft (FS) ausübt,
ferner ein zweites Kraftmittel (7a, 7b) umfasst, das in Richtung von der gegenüberliegenden Fläche (21) zu der Dichtfläche (5) eine zweite Kraft (FM) ausübt, wobei das zweite Kraftmittel (7a, 7b) ein erstes Magnetelement (7a), das an dem Grundelement (4) angeordnet ist, und ein zweites Magnetelement (7b), das an der rotierenden Komponente (20) angeordnet ist, umfasst und wobei die zweite Kraft (FM) größer ist als die erste Kraft (FS), um zu vermeiden, dass sich die gegenüberliegenden Flächen (5, 21) berühren, **dadurch gekennzeichnet, dass** die Dichtanordnung (1) an der Dichtfläche (5) und/oder an der gegenüberliegenden Fläche (21) mindestens ein Dichtungselement (8a, 8b) zum Abdichten des Spalts (9) umfasst und dass zwei oder mehr erste Magnetelemente (7a) vorhanden sind, die so aufgebaut sind, dass zwischen jedem ersten Magnetelement (7a) und dem zweiten Magnetelement verschiedene zweite Kräfte (FM) erzeugt werden können.

2. Dichtungsanordnung (1) nach Anspruch 1, **dadurch gekennzeichnet, dass** das erste Kraftmittel (6) eine Feder, insbesondere eine Schraubenfeder, oder ein Hydrauliksystem umfasst.

3. Dichtungsanordnung (1) nach Anspruch 1 oder 2, **dadurch gekennzeichnet, dass** es sich bei der zweiten Kraft (FM) um eine Abstoßungskraft zwischen dem ersten Magnetelement (7a) und dem zweiten Magnetelement (7b) handelt.

**4.** Dichtungsanordnung (1) nach einem der vorhergehenden Ansprüche, **dadurch gekennzeichnet, dass** das erste Magnetelement (7a) ein erstes Magnetfeld und das zweite Magnetelement (7b) ein zweites Magnetfeld erzeugt, wobei beide Magnetfelder die gleiche Ausrichtung aufweisen.

**5.** Dichtungsanordnung (1) nach einem der vorhergehenden Ansprüche, **dadurch gekennzeichnet, dass** das erste Magnetelement (7a) einen Elektromagneten, einen Permanentmagneten oder ein magnetisiertes Material und das zweite Magnetelement (7b) einen Elektromagneten, einen Permanentmagneten oder ein magnetisiertes Material umfasst.

**6.** Dichtungsanordnung (1) nach einem der vorhergehenden Ansprüche, **dadurch gekennzeichnet, dass** das mindestens eine Dichtungselement (8a, 8b) eine durchsichtige Dichtung, eine Labyrinthdichtung oder eine Bürstendichtung umfasst.

**7.** Dichtungsanordnung (1) nach einem der vorhergehenden Ansprüche, **dadurch gekennzeichnet, dass** das Grundelement (4) aus einem nichtmagnetischen Material besteht.

**8.** Dichtungsanordnung (1) nach einem der vorhergehenden Ansprüche, **dadurch gekennzeichnet, dass** das Grundelement (4) in einem Führungsmittel (12) in einer Führungsrichtung (14) linear geführt ist, wobei das Grundelement (4) auf eine solche Weise beweglich ist, dass die Dichtfläche (5) parallel oder insbesondere parallel zur gegenüberliegenden Fläche (21) und senkrecht oder insbesondere senkrecht zur Führungsrichtung (14) angeordnet ist.

**9.** Dichtungsanordnung (1) nach einem der vorhergehenden Ansprüche, **dadurch gekennzeichnet, dass** eine Abstandsmessvorrichtung (15) zum Messen der Höhe des Spalts (9) vorhanden ist und eine Steuereinheit (16) vorhanden ist, welche für den Datenaustausch mit der Abstandsmessvorrichtung (15) verbunden ist, wobei die Steuereinheit (16) den Strom für das erste Magnetelement (7a), bei dem es sich um einen Elektromagneten handelt, in Abhängigkeit von der gemessenen Höhe des Spaltes (9) regeln kann.

**10.** Dichtungsanordnung (1) nach Anspruch 9, **dadurch gekennzeichnet, dass** die Steuereinheit (16) den Strom für den Elektromagneten (7a) auf eine solche Weise regeln kann, dass eine konstante Höhe des Spaltes (9) eingerichtet werden kann.

**11.** Dichtungsanordnung (1) nach einem der vorhergehenden Ansprüche, **dadurch gekennzeichnet, dass** zwei oder mehr Abstandsmessvorrichtungen (15) zum Messen der Höhe des Spaltes (9) zwischen der jedem ersten Magnetelement (7a) zugeschriebenen Dichtfläche (5) und der gegenüberliegenden Fläche (21) vorhanden sind, wobei die Steuereinheit (16) den Strom für den Elektromagneten (7a) jedes ersten Magnetelements (7a) auf eine solche Weise regeln kann, dass der Spalt (9) zwischen allen ersten Magnetelementen (7a) und der gegenüberliegenden Fläche (21) gleich ist.

**12.** Verwendung einer Dichtungsanordnung (1) nach einem der vorhergehenden Ansprüche, die in einer Rotationsmaschine, insbesondere einer Turbine, einem Verdichter oder einem Generator angeordnet ist.

**13.** Verwendung einer Dichtungsanordnung (1) nach einem der vorhergehenden Ansprüche 1 bis 11, bei der die gegenüberliegende Fläche (5) an einem Rotor (20) oder einer Laufschaufel und die Dichtfläche (5) an einem Gehäuse (30) oder einer Leitschaufel einer Strömungsmaschine, insbesondere einer Dampfturbine, angeordnet ist.

**14.** Turbomaschine wie eine Turbine, insbesondere eine Gas- oder Dampfturbine, mit einer Dichtungsanordnung (1) nach einem der Ansprüche 1 bis 10.

**Revendications**

**1.** Agencement d'étanchéité (1) permettant d'étanchéifier une première région (2) par rapport à une deuxième région (3) entre un composant fixe (30) et un composant rotatif (20), un fluide pouvant dans tous les cas s'écouler à travers lesdites régions (2, 3) et/ou lesdites régions pouvant dans tous les cas être remplies avec un fluide et être maintenues à différentes pressions (P1, P2), de telle manière qu'une pression différentielle (P1-P2) est formée entre les deux régions (2, 3),
ledit agencement d'étanchéité (1)
comprenant un élément de base (4) qui est monté mobile au niveau du composant fixe (30), l'élément de base (4) présentant une surface d'étanchéité (5), dans lequel la surface d'étanchéité (5) est espacée par rapport à une surface opposée (21) au niveau du composant rotatif (20) afin de créer un espace vide (9) entre la surface d'étanchéité (5) et la surface opposée (21),

comprenant un premier moyen d'application de force (6) exerçant une première force (FS) dans la direction allant de la surface d'étanchéité (5) vers la surface opposée (21),

comprenant en outre un deuxième moyen d'application de force (7a, 7b) exerçant une deuxième force (FM) dans la direction allant de la surface opposée (21) vers la surface d'étanchéité (5), dans lequel le deuxième moyen d'application de force (7a, 7b) comprend un premier élément magnétique (7a) agencé au niveau de l'élément de base (4) et un deuxième élément magnétique (7b) agencé au niveau du composant rotatif (20) et dans lequel la deuxième force (FM) est supérieure à la première force (FS) afin d'empêcher les surfaces opposées (5, 21) de venir en contact, **caractérisé en ce que** l'agencement d'étanchéité (1) comprend au moins un élément d'étanchéité (8a, 8b) au niveau de la surface d'étanchéité (5) et/ou au niveau de la surface opposée (21) afin de fermer de manière étanche l'espace vide (9), et deux ou plus de deux premiers éléments magnétiques (7a) sont fournis, qui sont construits de telle manière que des deuxièmes forces (FM) différentes peuvent être générées entre chaque premier élément magnétique (7a) et le deuxième élément magnétique (7b).

2. Agencement d'étanchéité (1) selon la revendication 1, **caractérisé en ce que** le premier moyen d'application de force (6) comprend un ressort, en particulier un ressort hélicoïdal, ou un système hydraulique.

3. Agencement d'étanchéité (1) selon la revendication 1 ou 2, **caractérisé en ce que** la deuxième force (FM) est une force répulsive entre le premier élément magnétique (7a) et le deuxième élément magnétique (7b).

4. Agencement d'étanchéité (1) selon l'une quelconque des revendications précédentes, **caractérisé en ce que** le premier élément magnétique (7a) génère un premier champ magnétique et le deuxième élément magnétique (7b) génère un deuxième champ magnétique, dans lequel les deux champs magnétiques présentent la même orientation.

5. Agencement d'étanchéité (1) selon l'une quelconque des revendications précédentes, **caractérisé en ce que** le premier élément magnétique (7a) comprend un électroaimant, un aimant permanent ou un matériau aimanté et le deuxième élément magnétique (7b) comprend un électroaimant, un aimant permanent ou un matériau aimanté.

6. Agencement d'étanchéité (1) selon l'une quelconque des revendications précédentes, **caractérisé en ce que** le au moins un élément d'étanchéité (8a, 8b) comprend un joint à ouverture, un joint labyrinthe ou un joint à brosse.

7. Agencement d'étanchéité (1) selon l'une quelconque des revendications précédentes, **caractérisé en ce que** l'élément de base (4) est constitué d'un matériau non magnétique.

8. Agencement d'étanchéité (1) selon l'une quelconque des revendications précédentes, **caractérisé en ce que** l'élément de base (4) est guidé de manière linéaire dans un moyen de guidage (12) le long d'une direction de guidage (14), dans lequel l'élément de base (4) est mobile de telle manière que la surface d'étanchéité (5) est agencée parallèle ou en particulier parallèle à la surface opposée (21) et perpendiculaire ou en particulier perpendiculaire à la direction de guidage (14).

9. Agencement d'étanchéité (1) selon l'une quelconque des revendications précédentes, **caractérisé en ce qu'**un dispositif de mesure de distance (15) est fourni pour mesurer la hauteur de l'espace vide (9) et une unité de commande (16) est fournie, qui est raccordée au dispositif de mesure de distance (15) de manière à pouvoir communiquer des données, dans lequel l'unité de commande (16) peut réguler le courant du premier élément magnétique (7a) qui est un électroaimant en fonction de la hauteur mesurée de l'espace vide (9).

10. Agencement d'étanchéité (1) selon la revendication 9, **caractérisé en ce que** l'unité de commande (16) peut réguler le courant vers l'électroaimant (7a) de telle manière qu'une hauteur constante de l'espace vide (9) peut être définie.

11. Agencement d'étanchéité (1) selon l'une quelconque des revendications précédentes, **caractérisé en ce que** deux ou plus de deux dispositifs de mesure de distance (15) sont fournis pour mesurer la hauteur de l'espace vide (9) entre la surface d'étanchéité (5) assignée à chaque premier élément magnétique (7a) et la surface opposée (21), dans lequel l'unité de commande (16) peut réguler le courant vers l'électroaimant (7a) de chaque premier élément magnétique (7a) de telle manière que l'espace vide (9) est identique entre chacun des premiers éléments magnétiques (7a) et la surface opposée (21).

**12.** Utilisation d'un agencement d'étanchéité (1) selon l'une quelconque des revendications précédentes, qui est agencé dans une machine rotative, en particulier une turbine, un compresseur ou une génératrice.

**13.** Utilisation d'un agencement d'étanchéité (1) selon l'une quelconque des revendications précédentes 1 à 11, dans laquelle la surface opposée (5) est agencée au niveau d'un rotor (20) ou d'une pale de rotor et la surface d'étanchéité (5) est agencée au niveau d'un carter (30) ou d'une pale de guidage d'une machine à écoulement de fluide, en particulier d'une turbine à vapeur.

**14.** Turbine de type turbomachine, en particulier turbine à gaz ou à vapeur, comprenant un agencement d'étanchéité (1) selon l'une quelconque des revendications 1 à 10.

# FIG 1

STATE OF THE ART:

FIG 2

# FIG 3

FIG 4

FIG 5

7a

7a

7a

7a

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 0611905 A
- EP 1097325 B1
- US 6220602 B1
- US 2011062671 A1
- US 7815193 B2
- US 2009008881 A1
- US 2007248452 A1